Europäisches Patentamt

(19) European Patent Office

Office européen des brevets

(11) Publication number: **0 208 123**
**B1**

## (12) EUROPEAN PATENT SPECIFICATION

(45) Date of publication of the patent specification:
06.12.89

(51) Int. Cl.⁴: **H02K 37/00**

(21) Application number: **86107369.0**

(22) Date of filing: **28.09.83**

(60) Publication number of the earlier application in accordance with Art. 76 EPC: **0106595**

(54) **Printed-circuit motor.**

(30) Priority: **28.09.82 US 426188**

(43) Date of publication of application:
**14.01.87 Bulletin 87/3**

(45) Publication of the grant of the patent:
**06.12.89 Bulletin 89/49**

(84) Designated Contracting States:
**AT BE CH DE FR GB IT LI LU NL SE**

(56) References cited:
**WO-A-81/01223**
**FR-A- 2 399 754**
**GB-A- 936 621**
**US-A- 3 993 920**

(73) Proprietor: **Yang, Tai-Her, 5-1 Tay Pyng St., Shi Hwu Jenn Jang Huah Shiann(TW)**

(72) Inventor: **Yang, Tai-Her, 5-1 Tay Pyng St., Shi Hwu Jenn Jang Huah Shiann(TW)**

(74) Representative: **Arthur, Bryan Edward et al, 4 Dyers Buildings Holborn, London, EC1N 2JT(GB)**

ACTORUM AG

## Description

The present invention relates to printed-circuit motors. This application is divided out of European patent application number EP 83305856.3, publication number 5 0106595.

An object of the inventions is to provide a suitable construction for a printed circuit rotary electric motor.

French patent 2 399 754 describes a printed circuit motor having a disc-shaped rotor rotating within a stator comprising a permanent magnet assembly on one side of the rotor and a soft iron core on the other.

International patent publication WO 8 101 223 shows an actuator for a magnet disc drive having a flat armature bearing printed circuit coils movable within a permanent magnet assembly. Moreover GB-A 936 621 dicloses a flat armature having a winding being arranged on both faces of an armature, which winding is excited over brushes and commutator segments.

The present invention, which is defined in the claims appended hereto, provides a motor of this type, but which is a stepper motor.

The invention will be further described with reference to the drawings, in which:–

Figure 1 shows the structure of a printed-circuit stepper motor.
  1–1 Axle.
  1–2 End lid.
  1–3 Outercase.
  1–4 End lid.
  1–5 Bearing.
  1–6 Permanent magnet
  1–7 Ring-shaped magnet core.
  1–8 Printed winding rotor.
  1–9 Fixed ring.
  1–10 Brush

Figure 2 shows a printed-circuit stepper rotor with the conductor being disposed in an eddy-current shape.
  2–1 The insulating portion of the printed winding type rotor.
  2–2 The conducting portion of the printed winding type rotor.

Figure 3 shows diagrammatically the operation of a 15 printed-circuit stepper motor having a rotor of the kind shown in Figure 2 and a 4–pole stator.
  3–1 Axle.
  3–2 Outer case.
  3–3 Permanent magnet
  3–4 Bearing
  3–5 The insulating portion of the printed winding rotor.
  3–6 The conducting portion of the printed winding rotor.

Figure 4 shows the motor operation corresponding to the flow chart in Figure 3.

Figure 5 shows an induction winding for a pulse generator or for use with an inductive position encoder, connected to an additional pair of slip rings.
  5–1 The insulating portion of the rotor.
  5–2 One of the additional slip rings.
  5–3 One segment of the induction winding.

Figures 6 and 7, show an embodiment of the rotor for use with photocell sensing means.
  6–1 Rotor disc.
  6–2 Slip rings.
  6–3 Light-passing hole.

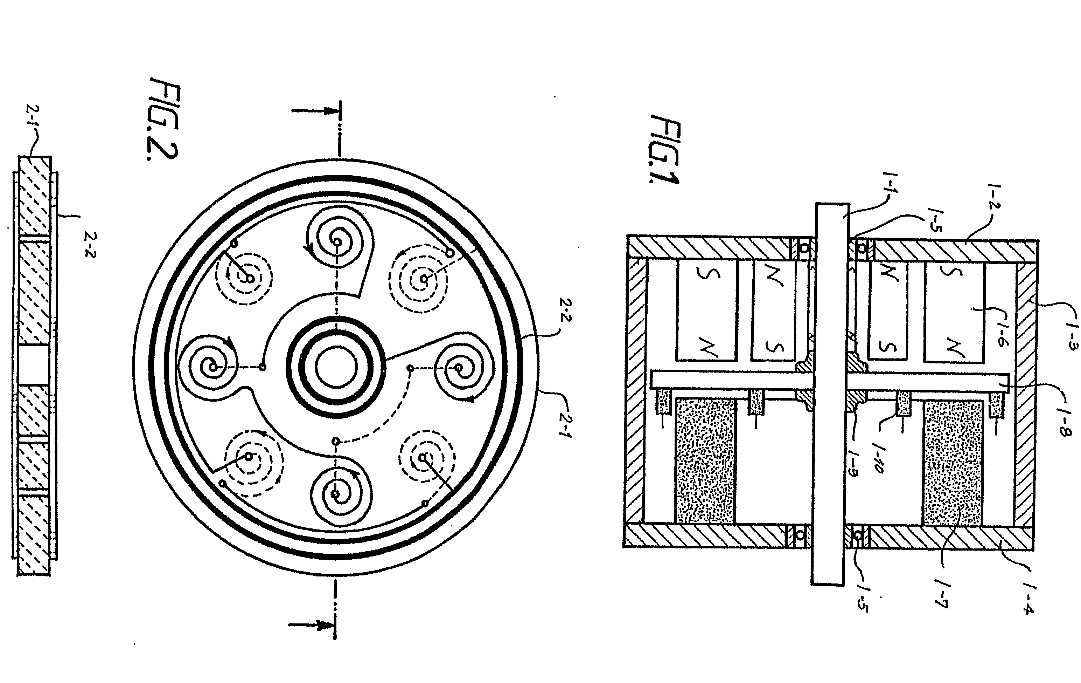

In this design, the printed-circuit stepper motor has a high frequency response, and its differences from the conventional stepper motor are shown in Figure 1. In addition to the mechanical assemblies such as the axle (1–1), bearing (1–5) and case (1–3), as in a conventional stepper motor, the motor of the invention is provided with a printéd-circuit flat rotor (1–8), and a stator having one side furnished with a suitable number of permanent magnet poles (1–6), and the other side with a flat iron-core magnetic circuit.

Figure 2 shows a rotor for a motor according to the invention. On the insulating board (2–1) of the rotor coil-shaped conductors (2–2) are attached and arranged; these conductors are attached on both sides of the insulating board (2–1), and they may be of spiral or other selected geometric shape with a selected number of poles and slip rings; the phase difference between the magnetic poles of said two sides is 90° so as to be capable of being driven in the conventional way for stepper motors.

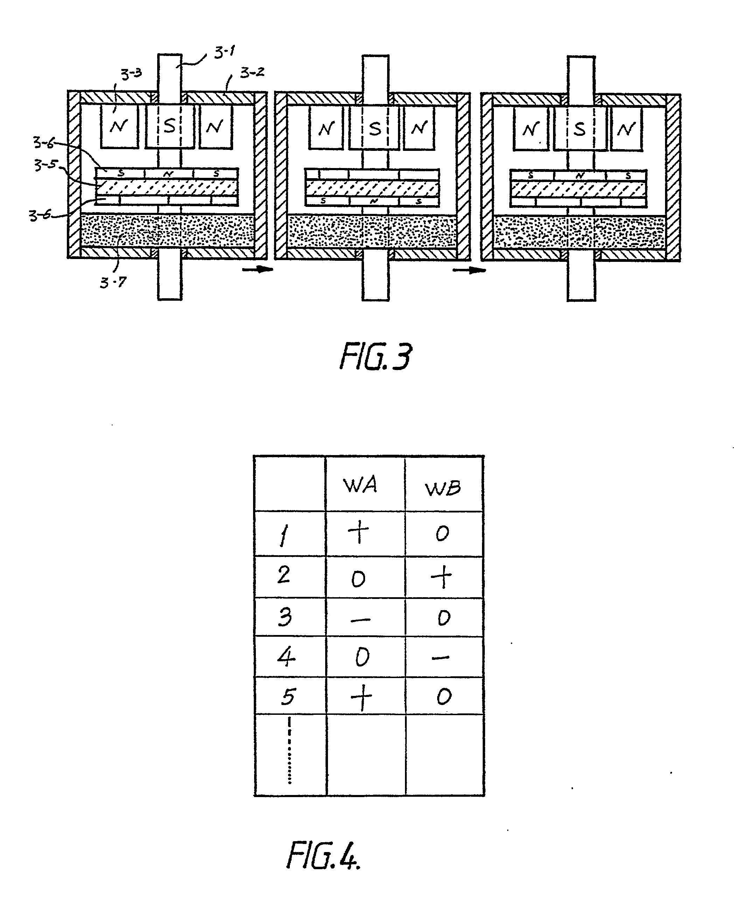

Figures 3 and 4 show diagrammatically and in table form the sequence of energisation of the coils of the rotor of Figure 2.

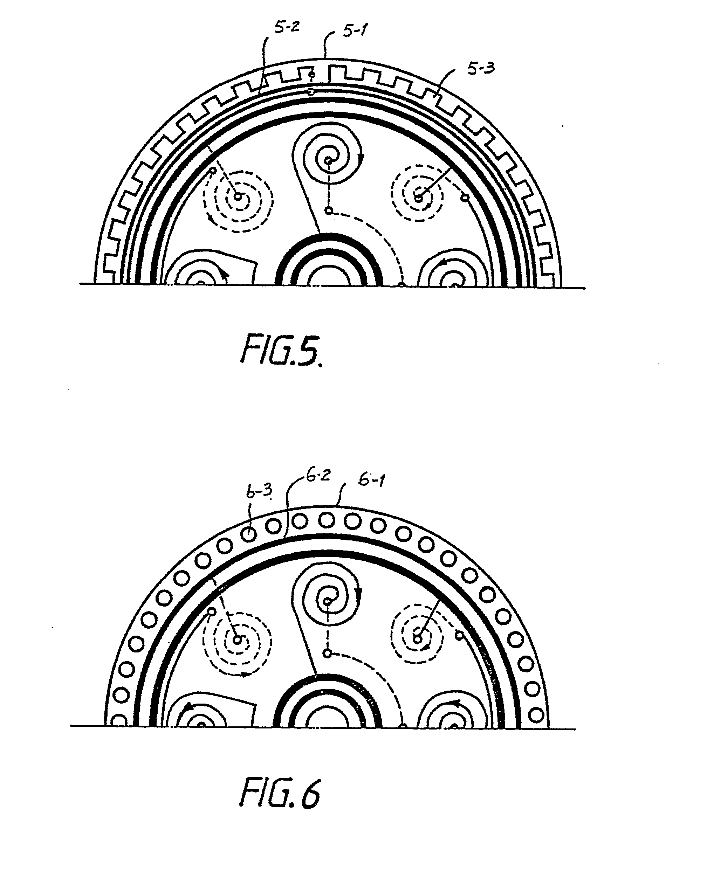

Figure 5 shows an embodiment of said motor furnished with pulse signal generating winding, which may cut the field of a permanent magnet to generate a corresponding A.C. signal, or may form an inductive detector together with an external sensing winding.

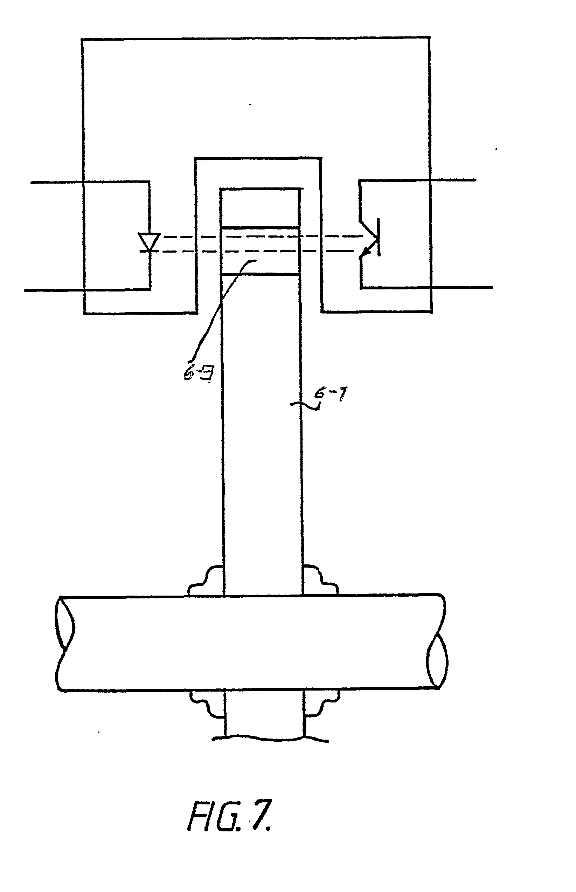

Figure 6 shows an embodiment of the laminae of said rotor being furnished with photocell encoder sensing holes (6–3). In this embodiment the outer rim of the disc-shaped rotor furnished with one or more holes (6–3), arranged to transmit a light signal to a photocell, so as to provide an encoder function. The number, the way of arrangement, and the number of rows may be determined in accordance with the actual requirement as shown in Figure 7. Said encoder function may also be obtained by a load induction type of sensing means or other known method.

## Claims

1. A printed circuit motor having a flat armature (1–8) rotable within a magnet assembly (1–6, 1–7) and bearing printed-circuit coils arranged circumferentially and alternately on opposite faces of the armature, whereby the armature is a disc-shaped and the consecutive coils on each face thereon are of opposite winding sense connected consecutively in series between a pair of slip rings (2–2), and the magnet assembly comprises circumferentially arranged (1–6) of alternate polarities, on one side of the rotor and a soft iron core (1–7) on the other.

2. A printed-circuit motor according to claim 1, in which the outer periphery of the rotor disc carries positionencoding means (1–3).

3. A printed-circuit motor according to claim 2, in which the position-encoding means comprises one or more apertures (1–3) arranged to cooperate with a photocell encoder (7–4).

4. A printed-circuit motor according to claim 2, in which the position-encoding means comprises a winding (2–5) arranged to provide a pulse signal to an inductive detector.

**Patentansprüche**

1. Elektromotor mit einer flachen gedruckten Leiterplatte als Rotor (1–8), welcher innerhalb einer Magnetanordnung (1–6, 1–7) drehbar ist und auf welchem aufgedruckte Leiterplatten – Spiralen wechselweise am Umfang auf den gegenüberliegenden Stirnflächen des Rotors angeordnet sind, wobei der Rotor scheibenförmig ist und die aufeinanderfolgenden Spiralen auf beiden Stirnflächen jeweils von entgegengesetztem Drehsinn sind und aufeinanderfolgend zwischen einem Paar von Schleifringen (2–2) in Reihe geschaltet sind, und die Magnetanordnung am Umfang angeordnete Permanentmagnete (1–6) abwechselnder Polarität auf der einen Seite des Rotors und einen Weicheisenkern (1–7) auf der anderen Seite des Rotors aufweist.

2. Elektromotor mit einer gedruckten Leiterplatte nach Anspruch 1, bei welchem die Rotorscheibe an ihrem äußeren Kreisumfang Lage – Kodiereinrichtungen (1–3) aufweist.

3. Elektromotor mit einer gedruckten Leiterplatte nach Anspruch 2, bei welchem die Lage – Kodiereinrichtungen eine oder mehrere Öffnungen (1–3) aufweisen, welche mit einer Photozellen – Kodiereinrichtung (7–4) zusammenwirken.

4. Elektromotor mit einer gedruckten Leiterplatte nach Anspruch 2, bei welchem die Lage – Kodiereinrichtungen eine Spule (2–5) aufweisen, welche Stromimpulse an einen induktiven Detektor liefert.

**Revendications**

1. Moteur à circuit imprimé ayant un induit plat (1–8) rotatif dans un montage à aimants (1–6, 1–7) et portant des bobines de circuit imprimé circonférentiellement et alternativement disposées sur les faces opposées de l'induit, au moyen duquel l'induit est un rotor en forme de disque et les bobines consécutives sur chaque face de celui-ci sont de sens d'enroulement opposé et reliées consécutivement en série entre une paire de bagues glissantes (2–2), et le montage à aimants comprend des aimants permanents (1–6) disposés circonférentiellement et avec des polarités alternées sur un côté du rotor et un noyau en fer doux (1–7) de l'autre côté.

2. Moteur à circuit imprimé selon la revendication 1, dans lequel la périphérie externe du disque du rotor porte des moyens de transmetteur de position (1–3).

3. Moteur à circuit imprimé selon la revendication 2, dans lequel les moyens de transmetteur de position comprennent une ou plusieurs ouvertures (1–3) diposées de manière à coopérer avec un codeur photoélectrique (7–4).

4. Moteur à circuit imprimé selon la revendication 2, dans lequel les moyens de transmetteur de position comprennent un enroulement (2–5) disposé de manière à fournir un signal d'impulsion à un détecteur inductif.

FIG.1.

FIG.2.

FIG.3

| | WA | WB |
|---|---|---|
| 1 | + | 0 |
| 2 | 0 | + |
| 3 | − | 0 |
| 4 | 0 | − |
| 5 | + | 0 |
| ⋮ | | |

FIG.4.

FIG.5.

FIG.6

FIG. 7.